# EUROPEAN PATENT SPECIFICATION

(11) **EP 0 414 629 B1**
(45) Date of publication and mention of the grant of the patent: **02.02.1994**
(21) Application number: 90630136.1
(22) Date of filing: 10.08.1990
(51) Int. Cl.: D21F 3/02

(54) **A bearing blanket for an extended nip press**
Tragband für eine Langspaltpresse
Bande de support pour une presse à pinçage prolongé

(30) Priority: 11.08.1989 US 392639
(43) Date of publication of application: 27.02.1991
(73) Proprietor: BELOIT CORPORATION, Beloit Wisconsin 53511 (US)
(72) Inventor: Filzen, Scott Ernest, Beloit, Wisconsin (US)
(74) Representative: Schmitz, Jean-Marie

(56) References cited:
- WO-A-87/02080
- DE-A- 3 318 984
- GB-A- 2 106 557
- US-A- 4 482 430

## Description

This invention relates to a bearing blanket which extends through an extended nip defined by a shoe and a cooperating backing roll for pressing water from a formed web.

More particularly, the present invention relates to a bearing blanket including a woven-base fabric and a liquid impervious urethane layer applied to the base fabric.

Bearing blankets are used for pressing water from a formed web during passage of the web through an extended nip press.

An extended nip press includes a press shoe and a cooperating backing roll for defining therebetween an extended nip. The press shoe defines a concave surface which cooperates with the outer surface of the backing roll such that when an endless looped bearing blanket extends through the extended nip, the bearing blanket is permitted to move with a web supported thereon through the extended nip. The interface between the bearing blanket and the shoe is lubricated to permit relative movement therebetween and the blanket together with one or more felts supports the web during transit of the web through the extended nip.

In the prior art, bearing blankets have been typically manufactured by training a base fabric around spaced rollers and applying a first coating of urethane to one side of the base fabric.

The urethane coating is then cured and optionally grooved. The base fabric with the first coating is subsequently turned inside out so that the other side of the base fabric can be coated.

An example of prior art bearing blanket of this type is shown and described in WO-A-87 02080. More specifically in WO-A-87 02080 there is described a bearing blanket according to the preamble of claim 1. The bearing blanket extends through an extended nip defined by a shoe and cooperating backing roll for pressing water from a formed web, the blanket presenting a relatively smooth shoe face for cooperating with and moving relative to the shoe. The blanket comprises a woven-base fabric defining a web side and a shoe side, a liquid impervious urethane layer applied to the web side of the base fabric, the web face of the urethane layer being spaced relative to the web side and defining a plurality of venting means for conveying water pressed from the web away from the extended nip. In WO-A-87 02080, a second urethane layer is applied to the shoe side of the base fabric.

Not only is the aforementioned manufacturing process relatively time consuming and complex, but more particularly, such prior art proposals have resulted in a bearing blanket having two urethane layers thereon with the attendant thickness thereof.

Such undue thickness and the provision of two such layers has resulted in the delamination of the urethane layers under extended usage of the bearing blanket.

Additionally, reversing of the bearing blanket in order to coat the opposite side of the base fabric has proved cumbersome. Problems have been experienced when manufacturing a bearing blanket suitable for use in the so-called apple type ENP disclosed in U. S. Patent No. RE31,923 to Justus. A blanket of the aforementioned type typically has a circumference of 4 m (13 feet) and a width of up to 10.7 m (35 feet). Turning such a blanket inside out without damaging the urethane layer applied thereon has proved to be difficult.

Therefore, it is the primary object of the present invention to provide a bearing blanket that overcomes the aforementioned inadequacies of the prior art proposals and which makes a significant contribution of the art of extended nip pressing, particularly with respect to inhibiting delamination of the bearing blanket, avoiding the reversing of the blanket during manufacturing thereof, and minimizing the thickness of the resultant blanket.

To achieve this, the bearing blanket of the invention is characterized by the features set forth in the characterizing portion of claim 1. More specifically, according to the invention, the blanket includes a single liquid impervious urethane layer which thoroughly penetrates into and through the base fabric so that when the urethane layer is cured, the urethane layer defines the web face and the shoe face. The shoe face is substantially coplanar with the shoe side of the base fabric.

The invention also consists in a method of manufacturing a blanket as set forth in claim 13. The method of the invention includes the steps of wrapping a base fabric around a smooth cylindrical mandrel and pressure applying a urethane layer onto and through the base fabric such that the shoe face of the single urethane layer is relatively smooth and co-planar with a shoe side of the base fabric while a web face of the single layer is spaced relative to a web side of the base fabric.

The present invention overcomes the aforementioned inadequacies of the prior art proposals by applying a single layer of urethane to the base fabric such that the urethane penetrates into and the base fabric to provide the smooth shoe contacting face and the subsequently grooved web face.

Such single layered bearing blanket has a thickness which is substantially less than the thickness of the double layered prior art proposals and does not require the reversing step during manufacture thereof.

Advantageous embodiments of the invention are claimed in the subclaims.

In one embodiment of the present invention, the bearing blanket has the web face provided with a plurality of parallel-spaced grooves with grooves adjacent to the lateral edges of the blanket being ground-off in order to relieve the stresses applied to the blanket during multi-plane bending of the blanket while extending through an extended nip.

Other advantages of the present invention will be apparent to those skilled in the art by consideration of the detailed description contained hereinafter taken in conjunction with the annexed drawings.

In a more specific embodiment of the present invention, the base fabric is manufactured from nylon filaments, and the urethane layer has a hardness within the range 85 - 100 on the Shore A hardness scale.

The plurality of venting means include in a preferred embodiment to the present invention a plurality of parallel-spaced grooves with the grooves extending in a machine direction.

In an alternative embodiment of the present invention, the parallel grooves extend diagonally relative to a machine direction.

Each groove of the plurality of grooves has a depth within the range 0.125 cm to 0.51 cm (.05 to .2 inches) and has a width within the range 0.05 cm to 0.11 cm (.02 to .04 inches). Furthermore, the grooves are spaced relative to each other within the range 6 to 10 grooves per 2.54 cm (1 inch).

In a preferred embodiment of the present invention, the grooves which are disposed adjacent to each lateral edge of the bearing blanket are ground off such that stress applied to the blanket during multi-plane bending of the blanket while extending through the extended nip is reduced.

In another embodiment of the present invention, the plurality of venting means includes a plurality of spaced blind drilled holes for the reception therein of water pressed from the web.

Many modifications and variations of the present invention will be readily apparent to those skilled in the art by a consideration of the detailed description of the preferred embodiment taken in conjunction with the annexed drawings.
Figure 1 is a sectional view through a prior art bearing blanket having a base fabric with a web side layer and a shoe side layer applied thereon;
Figure 2 is a sectional view of a bearing blanket according to the present invention showing a base fabric and a single urethane layer applied thereto.
Figure 3 is a plan view of the blanket shown in Figure 2;
Figure 4 is a plan view of an alternative embodiment of the present invention showing diagonal grooves; and
Figure 5 is a fragmentary sectional view showing the lateral edges of the blanket shown in Figure 2.

Similar reference characters refer to similar parts throughout the various embodiments of the present invention.

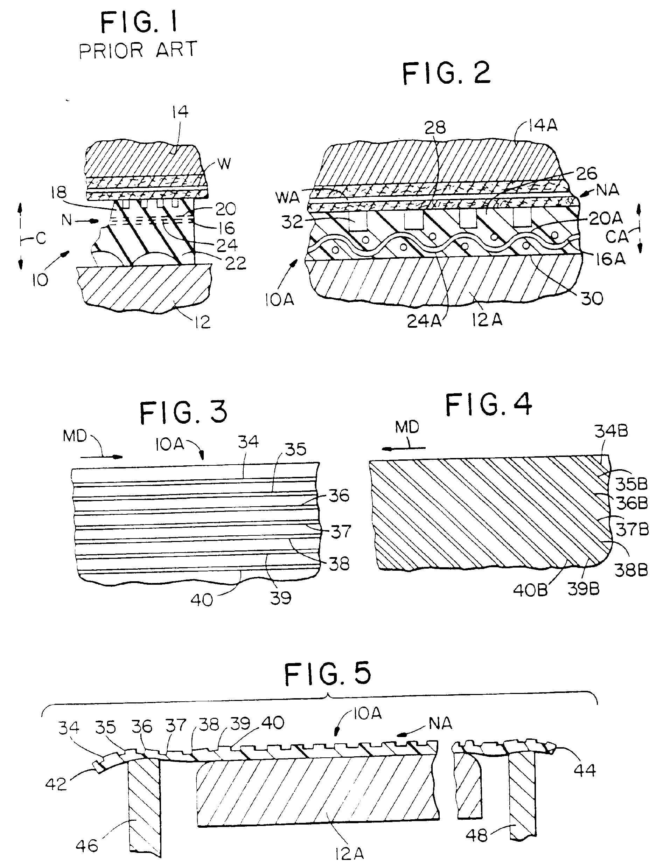

Figure 1 is a sectional view of a typical prior art bearing blanket generally designated 10 for extending through an extended nip N defined between a shoe 12 and a cooperating backing roll 14 for pressing water from a formed web W.

The prior art bearing blanket 10 includes a woven base fabric 16 and a first urethane layer 18 applied to the web side 20 of the base fabric 16.

A second urethane layer 22 is applied to the shoe side 24 of the base fabric 16.

The resultant prior art bearing blanket 16 has an overall caliper C which is relatively thick resulting in premature delamination and break-down of the resultant blanket 10.

Figure 2 is a sectional view of a bearing blanket generally designated 10A according to the present invention. The blanket 10A extends through an extended nip NA defined by a shoe 12A and a cooperating backing roll 14A for pressing water from web WA.

The blanket 10A includes a woven based fabric 16A defining a web side 20A and a shoe side 24A.

A single liquid impervious urethane layer 26 is applied to the web side 20A of the base fabric 16A such that the urethane layer 26 thoroughly penetrates into and through the base fabric 16A so that when the urethane layer 26 is cured, the urethane layer 26 defines a web face 28 and a shoe face 30.

The web face 28 is spaced relative to the web side 20A. The web face 28 defines a plurality of venting means generally designated 32 for conveying water pressed from the web WA away from the extended nip NA.

The shoe face 30 of the layer 26 is substantially co-planar with the shoe side 24A of the base fabric 16A such that the shoe face 30 is relatively smooth for cooperating with and moving relative to the shoe 12A.

The base fabric 16A, as shown in Figure 2, is manufactured from nylon monofilaments and the urethane layer 26 has a hardness within the range 85 to 100 on the Shore A hardness scale.

Figure 3 is a plan view of the blanket 10A shown in Figure 2 and shows a plurality of parallel spaced grooves 34, 35, 36, 37, 38, 39, 40 with the grooves 34 to 40 extending in a machine direction as indicated by the arrow MD.

In an alternative embodiment of the present invention as shown in Figure 4, the grooves 34B, 35B, 36B, 37B, 38B, 39B, 40B extend diagonally relative to the machine direction as indicated by the arrow MD.

In both the embodiments of Figures 3 and 4, each groove of the plurality of grooves has a depth within the range (0.125 cm to 0.51 cm (.05 to .2 inches).

Furthermore, each groove of the plurality of grooves has a width within the range 0.05 to 0.11 cm (.02 to .04 inches) and preferably a width of 0.079 cm (.031 inches).

Additionally, the grooves are spaced relative to each other within the range 6 to 10 grooves per 2.54 cm (inch) and in a preferred embodiment have a spacing of 8 grooves per 2.54 cm (inch).

As shown in Figure 5, the plurality of parallel spaced grooves 34 to 40 include grooves 34-39 which are disposed adjacent to lateral edges 42 and 44 of the blanket 10A. Such grooves 34-39 are ground off as shown in Figure 5 such that stress applied to the blanket 10A during multi-plane bending of the blanket 10A while extending through the extended nip NA and over the lateral rotatable heads 46 and 48 is reduced.

The present invention provides a bearing blanket which is easy to manufacture and which avoids the complex process step of reversing the blanket during manufacture and more importantly provides a bearing blanket having a caliper, or thickness, CA which is considerably less than the thickness C of the counterpart prior art two layered blankets, thereby inhibiting delamination and early failure of the resultant bearing blanket.

## Claims

1. A bearing blanket (10A) extending through an extended nip (NA) defined by a shoe (12A) and cooperating backing roll (14A) for pressing water from a formed web (WA), said blanket presenting a relatively smooth shoe face (30) for cooperating with and moving relative to the shoe (12A),
said blanket (10A) comprising:
a woven-base fabric (16A) defining a web side (20A) and a shoe side (24A),
a liquid impervious urethane layer (26) applied to said web side (20A) of said base fabric (16A)
the web face (28) of said urethane layer (26) being spaced relative to said web side (20A),
said web face (28) defining a plurality of venting means (32) for conveying water pressed from the web (WA) away from the extended nip (NA),
characterized in that said urethane layer (26) is a single urethane layer (26) which thoroughly penetrates into and through said base fabric (16A) so that when said urethane layer (26) is cured, said urethane layer (26) defines the said web face (28) and shoe face (30),
said shoe face (30) being substantially coplanar with said shoe side (24A) of said base fabric (16A).

2. A bearing blanket as set forth in claim 1, characterized in that said base fabric (16A) is manufactured from nylon monofilaments.

3. A bearing blanket as set forth in claim 1, characterized in that said urethane layer (26) has a hardness within the range 85 to 100 on the Shore A hardness scale.

4. A bearing blanket as set forth in claim 1, characterized in that said plurality of venting means (32) includes a plurality of parallel spaced grooves (34-40; 34B-40B).

5. A bearing blanket as set forth in claim 4, characterized in that said grooves (34-40) extend in a machine direction (MD).

6. A bearing blanket as set forth in claim 4, characterized in that said grooves (34B-40B) extend diagonally relative to a machine direction (MD).

7. A bearing blanket as set forth in claim 4, characterized in that each groove of said plurality of grooves (34-40; 34B-40B) has a depth within the range 0.125 to 0.51 cm (.05 to .2 inches).

8. A bearing blanket as set forth in claim 4, characterized in that each groove of said plurality of grooves (34-40; 34B-40B) has a width within the range 0.05 cm to 0.11 cm (.02 to .04 inches).

9. A bearing blanket as set forth in claim 4, characterized in that said grooves (34-40; 34B-40B) are spaced relative to each other within the range 6 to 10 grooves per 2.54 cm (1 inch).

10. A bearing blanket as set forth in claim 5, characterized in that grooves (34-39) of said plurality of parallel-spaced grooves (34-40) disposed adjacent to each lateral edge (42,44) of the bearing blanket (10A) are ground-off such that stress applied to the blanket (10A) during multi-plane bending of the blanket (10A) while extending through the extended nip (NA) is reduced.

11. A bearing blanket as set forth in claim 1, characterized in that said plurality of venting means (32) includes a plurality of spaced blind drilled holes for the reception therein of water pressed from the web (WA).

12. A bearing blanket as set forth in claim 1, characterized in that said shoe face (30) is relatively smooth as a result of said woven-base fabric (16A) being applied to a smooth mandrel and said urethane layer (26) being applied through said base fabric (16A) such that said shoe face (30) corresponds with a smooth outer-cylindrical surface of said mandrel.

13. A method of manufacturing a bearing blanket (10A) comprising the steps of:
wrapping a base fabric (16A) around a smooth cylindrical mandrel,
pressure applying a single urethane layer (26) onto and through the base fabric (16A) such that the shoe face (30) of the single urethane layer (26) is relatively smooth and co-planar with a shoe side (24A) of the base fabric (16A) while a web face (28) of the single layer (26) is spaced relative to a web side (20A) of the base fabric (16A); and
grooving the web face (28) of the single layer (26) for venting an extended nip press in use of the bearing blanket (10A).

## Patentansprüche

1. Tragband (10A) das durch den Langspalt (NA) verläuft, der durch einen Schuh (12A) und eine damit zusammen- wirkende Presswalze (14A) gebildet wird, um Wasser aus einer Papierbahn (WA) zu pressen, wobei das Tragband eine relativ glatte Schuhseite (30) aufweist welche mit dem Schuh (12A) zusammenwirkt und sich über diesen bewegt, wobei das Tragband (10A)
ein gewobenes Grundgewebe (16A) mit einer Papierbahnseite (20A) und einer Pressschuhseite (24A) aufweist,
mit einer flüssigkeitsundurchlässigen Urethanschicht (26), welche auf die Papierbahnseite (20A) des Tragbandes (16A) aufgebracht ist,
wobei die Papierbahnseite der Urethanschicht (26) zur genannten Papierbahnseite (20A) einen Abstand hat,
wobei die Papierbahnseite (28) eine Nehrzahl von Ablaufmitteln (32) aufweist um aus der Papierbahn (WA) ausgepresstes Wasser aus dem Langspalt (NA) zu führen,
dadurch gekennzeichnet, dass die Urethanschicht (26) eine einzige Urethanschicht (26) ist, welche gänzlich in und durch das Grundgewebe (16A) dringt, derart, dass, wenn die Urethanschicht (26) aushärtet, die Urethanschicht (26) die Papierbahnseite (28) und die Schuhseite (30) bildet.

2. Tragband nach Anspruch 1, dadurch gekennzeichnet, dass das Grundgewebe (16A) aus Nylon-Monofilamenten hergestellt ist.

3. Tragband nach Anspruch 1, dadurch gekennzeichnet, dass die Urethanschicht (26) eine Härte im Bereich von 85 bis 100 nach der Shore-A-Härteskala aufweist.

4. Tragband nach Anspruch 1, dadurch gekennzeichnet, dass die Mehrzahl der Ablaufmittel (32) eine Mehrzahl von in Abständen, zueinander parallel angeordneten Rillen (34 - 40; 34B - 40B) ist.

5. Tragband nach Anspruch 4, dadurch gekennzeichnet, dass die Rillen (34 - 40) in Maschinenlaufrichtung (MD) verlaufen.

6. Tragband nach Anspruch 4, dadurch gekennzeichnet, dass die Rillen (34 - 40) diagonal zur Maschinenlaufrichtung verlaufen

7. Tragband nach Anspruch 4, dadurch gekennzeichnet, dass jede Rillen (34 - 40) der Mehrzahl der Rillen (34 - 40; 34B - 40B) eine Tiefe im Bereich 0.125 bis 0.51 cm (.05 bis .2 Zoll) hat.

8. Tragband nach Anspruch 4, dadurch gekennzeichnet, dass jede Rillen (34 - 40) der Mehrzahl der Rillen (34 - 40; 34B - 40B) eine Breite im Bereich 0.05 cm bis 0.11 cm (.02 bis .04 Zoll) hat.

9. Tragband nach Anspruch 4, dadurch gekennzeichnet, dass die Rillen (34 - 40; 34B - 40B) zueinander in einem Abstand im Bereich von 6 bis 10 Rillen pro 2.54 cm (1 Zoll) angeordnet sind.

10. Tragband nach Anspruch 5, dadurch gekennzeichnet, dass die Rillen (34 . 39) der Mehrzahl der parallel angeordneten Rillen (34 - 40) im Bereich jedes seitlichen Randes (42, 44) des Tragbandes (10A) in das Tragband (10A) geschliffen sind, derart, dass der Zug reduziert wird, welcher das Tragband (10A) bei der Mehrfachumlenkung des Bandes (10A) erfährt, wenn dieses durch den Langspalt (NA) läuft.

11. Tragband nach Anspruch 1, dadurch gekennzeichnet, dass die Mehrzahl der Ablaufmittel (32) eine Mehrzahl von Sacklochbohrungen für das Aufnehmen von aus der Papierbahn (WA) gepresstem Wasser, ist.

12. Tragband nach Anspruch 1, dadurch gekennzeichnet, dass die Pressschuhseite (30) relativ glatt ist als Folge davon, dass das gewobene Grundgewebe (16A) auf einen glatten Wickeldorn gebracht wird und die Urethanschicht (26) durch das Grundgewebe (16A) aufgebracht wird, derart, dass die Pressschuhseite (30) auf der glatten zylindrischen Oberfläche des Wickeldorns aufliegt.

13. Verfahren zum Herstellen eines Tragbandes (10A) nach folgenden Schritten:
wickeln des Grundgewebes (16A) um einen glatten zylindrischen Wickeldorn,
mit Druck aufbringen einer einzigen Urethanschicht (26) auf und durch das Grundgewebe (16A), derart dass die Pressschuhseite (30) der einzigen Urethanschicht (26) relativ glatt und koplanar mit der Pressschuhseite (24A) des Grundgewebes (16A) ist, während eine Papierbahnseite (28) der einzigen Schicht (26) einen Abstand zur Papierbahnseite (20A) des Grundgewebes (16A) hat; und
die Papierbahnseite (28) der einzigen Schicht (26) gerillt wird, um beim Gebrauch des Tragbandes in einer Langspaltpresse diese zu entwässern.

## Revendications

1. Blanchet porteur (10A) s'étendant à travers un écartement étendu (NA) défini par un sabot (12A) et un cylindre de support coopérant (14A) pour presser de l'eau hors d'une bande façonnée (WA), ledit blanchet présentant une face (30) côté sabot relativement lisse pour coopérer avec le sabot (12A) et se déplacer par rapport à ce dernier,
ledit blanchet (10A) comprenant :
une étoffe de base en tissu (16A) définissant un côté bande (20A) et un côté sabot (24A),
une couche d'uréthanne (26) imperméable aux liquides, appliquée sur ledit côté bande (2OA) de ladite étoffe de base (16A),
la face (28) côté bande de ladite couche d'uréthanne (26) étant espacée par rapport audit côté bande (20A),
ladite face (28) côté bande définissant plusieurs moyens d'évacuation (32) pour transporter l'eau pressée de la bande (WA) à l'écart de l'écartement étendu (NA),
caractérisé en ce que ladite couche d'uréthanne (26) est une couche d'uréthanne unique (26) qui pénètre profondément dans ladite étoffe de base (16A) et à travers cette dernière de telle sorte que, lorsque ladite couche d'uréthanne (26) est durcie, ladite couche d'uréthanne (26) définit ladite face (28) côté bande et ladite face (30) côté sabot,
ladite face (30) côté sabot étant essentiellement coplanaire avec ledit côté sabot (24A) de ladite étoffe de base (16A).

2. Blanchet porteur selon la revendication 1, caractérisé en ce que ladite étoffe de base (16A) est fabriquée à partir de monofilaments en nylon.

3. Blanchet porteur selon la revendication 1, caractérisé en ce que ladite couche d'uréthanne (26) possède une dureté dans le domaine de 85 à 100 sur l'échelle de dureté Shore A.

4. Blanchet porteur selon la revendication 1, caractérisé en ce que lesdits plusieurs moyens d'évacuation (32) englobent plusieurs rainures (34-40; 34B-40B) parallèlement espacées.

5. Blanchet porteur selon la revendication 4, caractérisé en ce que lesdites rainures (34-40) s'étendent dans le sens machine (MD).

6. Blanchet porteur selon la revendication 4, caractérisé en ce que lesdites rainures (34B-40B) s'étendent diagonalement par rapport au sens machine (MD).

7. Blanchet porteur selon la revendication 4, caractérisé en ce que chaque rainure desdites plusieurs rainures (34-40; 34B-40B) possède une profondeur qui se situe dans le domaine de 0,125 à 0,51 cm (0,05 à 0,2 pouce).

8. Blanchet porteur selon la revendication 4, caractérisé en ce que chaque rainure desdites plusieurs rainures (34-40; 34B-40B) possède une largeur qui se situe dans le domaine de 0,05 cm à 0,11 cm (0,02 à 0,04 pouce).

9. Blanchet porteur selon la revendication 4, caractérisé en ce que lesdites rainures (34-40; 34B-40B) sont espacées l'une par rapport à l'autre dans le domaine de 6 à 10 rainures par 2,54 cm (1 pouce).

10. Blanchet porteur selon la revendication 5, caractérisé en ce que les rainures (34-39) desdites plusieurs rainures (34-40) parallèlement espacées disposées en position adjacente à chaque bord latéral (42, 44) du blanchet porteur (10A) sont éliminées par meulage de telle sorte que l'on réduit la contrainte qui s'exerce sur le blanchet (10A) lors de la flexion multiplanaire du blanchet (10A), tandis qu'il s'étend à travers l'écartement étendu (NA).

11. Blanchet porteur selon la revendication 1, caractérisé en ce que lesdits plusieurs moyens d'évacuation (32) englobent plusieurs trous borgnes forés espacés pour y recevoir l'eau pressée hors de la bande (WA).

12. Blanchet porteur selon la revendication 1, caractérisé en ce que ladite face (30) côté sabot est relativement lisse suite à l'application de ladite étoffe de base tissée (16A) sur un mandrin lisse et suite à l'application de ladite couche d'uréthanne (26) à travers ladite étoffe de base (16A) de telle sorte que ladite face (30) côté sabot corresponde à une surface cylindrique externe lisse dudit mandrin.

13. Procédé de fabrication d'un blanchet porteur (10A) comprenant les étapes consistant à :
enrouler une étoffe de base (16A) autour d'un mandrin cylindrique lisse,
appliquer avec de la pression une couche d'uréthanne unique (26) sur l'étoffe de base (16A) et à travers cette dernière de telle sorte que la face (30) côté sabot de la couche unique d'uréthanne (26) soit relativement lisse et coplanaire avec le côté sabot (24A) de l'étoffe de base (16A), tandis que la face (28) côté bande de la couche unique (26) est espacée par rapport au côté bande (20A) de l'étoffe de base (16A); et
rainurer la face (28) côté bande de la couche unique (26) pour éventer une presse à écartement étendu lorsqu'on utilise le blanchet porteur (10A).
